# EUROPÄISCHE PATENTSCHRIFT

(11) **EP 1 452 224 B1**
(45) Veröffentlichungstag und Bekanntmachung des Hinweises auf die Patenterteilung: **27.09.2006**
(21) Anmeldenummer: 04001412.8
(22) Anmeldetag: 23.01.2004
(51) Int. Cl.: B01J 2/16, B01J 8/36, B01J 8/44

(54) **Tunnelförmige Vorrichtung zum Behandeln von partikelförmigem Gut**
Tunnel-like device for treating a particulate material
Dispositif en forme de tunnel pour traiter une matière particulaire

(30) Priorität: 28.02.2003 DE 10309989
(43) Veröffentlichungstag der Anmeldung: 01.09.2004
(73) Patentinhaber: Hüttlin, Herbert, Dr. h.c., 79539 Lörrach (DE)
(72) Erfinder: Hüttlin, Herbert, Dr. h.c., 79539 Lörrach (DE)
(74) Vertreter: Weller, Wolfgang

(56) Entgegenhaltungen:
- DE-A- 19 904 147
- FR-A- 1 570 475
- US-A- 3 733 056
- US-A- 4 237 814

## Beschreibung

Die Erfindung betrifft allgemein eine Vorrichtung zum Behandeln von partikelförmigem Gut.

Aus der DE 199 04 147 A1 ist eine Vorrichtung zum Behandeln von partikelförmigem Gut bekannt, die eine Prozesskammer zum Aufnehmen und zum Behandeln des Gutes aufweist. Ein im Querschnitt kreisrunder Boden der Prozesskammer besteht aus einander überlappenden, etwa ebenen Leitplatten, zwischen denen Schlitze gebildet sind, über die Prozessluft mit einer im Wesentlichen horizontalen Bewegungskomponente in die Prozesskammer einführbar ist. Die Schlitze sind dabei derart angeordnet, dass zwei entgegengesetzte, aufeinander zu gerichtete, im Wesentlichen horizontal verlaufende Strömungen an eingeführter Prozessluft entstehen, die längs einer Aufbruchzone aufeinander prallen und in eine im Wesentlichen vertikal nach oben gerichtete Strömung umgelenkt werden.

Derartige Vorrichtungen dienen dazu, um partikelförmiges Gut zu trocknen, zu granulieren oder zu coaten.

Ein gasförmiges Medium, sogenannte Prozessluft, wird über den Boden in die Prozesskammer eingeführt und tritt dabei durch die zahlreichen Schlitze zwischen den sich überlappenden Leitplatten etwa horizontal gerichtet in die Prozesskammer ein. In der Aufbruchzone prallen die entgegengesetzt gerichteten Ströme aufeinander, werden nach oben abgelenkt, und die Prozessluft tritt am oberen Ende über eine Abzugkammer ab. Auf Grund der Schwerkraft fällt das Gut wieder auf den Boden zurück, so dass sich ein beidseits der Aufbruchzone etwa kreisförmig umlaufender Wirbelstrom entwickelt.

Die eingangs erwähnte Vorrichtung weist einen etwa kreisförmig geschlossenen Boden auf, und die Prozesskammer besitzt eine zylindrische Form.

Es sind auch Vorrichtungen mit einer tunnelförmigen Prozesskammer bekannt, sogenannte Beschichtungs- oder Trocknungstunnel, in denen das zu behandelnde Gut nicht nur verwirbelt wird, sondern auch nach und nach von einem Einlass entlang der Längsrichtung des Tunnels bis zu einem Auslass gefördert wird. Dies eröffnet ein kontinuierliches Arbeiten.

Ein grundsätzliches Problem bei Vorrichtungen mit tunnelförmigen langerstreckten Prozesskammern besteht darin, das verwirbelte Gut nach und nach vom Einlass zum Auslass zu transportieren.

Dazu ist bekannt geworden, die gesamte Vorrichtung geneigt anzuordnen, so dass dieser Transport unter Zuhilfenahme der Schwerkraft erfolgt.

Ferner ist bekannt geworden, die Vorrichtung in Neigungsrichtung zusätzlich durch Exzenter oder Vibratoren zu bewegen, um die Gutbewegung zu unterstützen.

Im praktischen Einsatz wurde festgestellt, dass dies apparativ sehr aufwändig ist, insbesondere bei großen und schweren Apparaturen. Ferner wurde festgestellt, dass das verwirbelte Gut während seiner Bewegung vom Einlass zum Auslass zum Aufschichten oder zum Aufhäufen neigt, d.h. die Schichtdicke des verwirbelten Gutes nimmt zum Auslass hin zu.

Dies ist dahingehend nachteilig, dass auf Grund dieser relativ unkontrollierbaren Verhältnisse ungleichmäßige Behandlungsergebnisse erzielt werden. Nimmt man als Beispiel die Behandlung eines Gutteilchens in Form einer Kapsel an, wie das häufig im pharmazeutischen Bereich zu finden ist, so fällt diese Kapsel beim Herstellungsprozess als ein Hohlkörper an, dessen Innenraum mit der galenischen Zubereitung des Arzneimittels, meist in Form einer Flüssigkeit, gefüllt ist. Die Kapselwand ist unmittelbar nach dem Herstellungsprozess ein gelartiger, noch weicher Körper, der meist einen hohen Feuchtigkeitsgehalt aufweist. Bei einer Trocknung soll nun diese Kapselwand durch Entzug von Feuchtigkeit ausgetrocknet und dadurch gehärtet und verfestigt werden. Dieser Vorgang soll kontrolliert vor sich gehen, d.h. nicht zu rasch und nicht zu langsam; die nach und nach austrocknende Gelschicht soll nicht verspröden und keine Risse bilden, da ansonsten die Gefahr besteht, dass die äußere Schicht undicht wird oder sich ablöst. Ferner soll sichergestellt sein, dass der flüssige Inhalt im Inneren verbleibt und nicht durch den Trocknungsprozess über die äußere Schicht der Kapsel austritt.

Somit ändert sich die Kapselschicht beim Durchlaufen der langerstreckten tunnelförmigen Prozesskammer von einer ausgänglich eher weichen, zähen, gegebenenfalls klebrigen Konsistenz zu einer härteren, wasserarmen, durchgetrockneten, festen Konsistenz. Der Umschichtungscharakter der in der Prozesskammer umgewälzten Gutmasse ändert sich daher vom Einlass zum Auslass.

Das Dokument FR-A-1 570 475 beschreibt eine Vorrichtung zum Behandeln von partikelförmigem Gut mit einer tunnelförmigen Prozesskammer mit einem Boden, der sich überlappende Leitplatten aufweist, zwischen denen in Quersrichtung der Prozesskammer erstreckende Schlitze für die Prozessluft ausgebildet sind.

Darüber hinaus sollen derartige Vorrichtungen flexible Durchsatzmengen ermöglichen, so dass sie beispielsweise zwischen einen originären Herstellungsprozess einer solchen Kapsel und der nachfolgenden Verpackung, beispielsweise einer Verblisterung, geschaltet werden können.

Es ist daher Aufgabe der vorliegenden Erfindung, eine Vorrichtung zum Behandeln von partikelförmigem Gut mit einer langerstreckten, tunnelförmigen Prozesskammer zu schaffen, die ein gutes Behandlungsergebnis bei einem kontinuierlichen Durchsatz unter reproduzierbaren, gut steuerbaren und somit beherrschbaren Bedingungen ermöglicht.

Erfindungsgemäß wird die Aufgabe bei einer derartigen Vorrichtung dadurch gelöst, dass sie einen Boden beinhaltet, der sich überlappende Leitplatten aufweist, zwischen denen sich in Längsrichtung der Prozesskammer erstreckende Schlitze ausgebildet sind, durch die Prozessluft in die Prozesskammer einführbar ist, und zwar derart, dass zwei quer zur Längsrichtung und entgegengesetzt aufeinander zu gerichtete Strömungen an eingeführter Prozessluft entstehen, die längs einer Aufbruchzone aufeinander treffen, sowie mit im Boden angeordneten Luftleitelementen für die Prozessluft, die derart verstellbar sind, dass der Prozessluft eine veränderbare Bewegungskomponente in Längsrichtung auferlegbar ist.

Durch die Ausgestaltung des Bodens derart, dass zwei entgegengesetzt gerichtete aufeinander zu gerichtete Strömungen entstehen, die längs einer Aufbruchzone, die sich in Längsrichtung der Prozesskammer erstreckt, aufeinandertreffen, kann beidseits dieser Aufbruchzone, im Querschnitt gesehen, eine intensive umlaufende Verwirbelung und somit ein intensiver Austausch zwischen Prozessluft und dem durch diese verwirbelten Gut stattfinden. Dies ist ein erster wichtiger Parameter, um beherrschbare Bedingungen zu schaffen, die für den notwendigen Energieaustausch zwischen Prozessluft und zu behandelndem Gut sorgen. Durch die verstellbaren Luftleitelemente ist es nun möglich, dem in Querrichtung verwirbelten Gut eine mehr oder weniger starke Bewegungskomponente in Längsrichtung zu verleihen. Dieser zweite wichtige Parameter gibt Einfluss auf die Verweildauer der Gutteilchen beim Durchlaufen der langerstreckten tunnelförmigen Prozesskammer. Es muss also nicht die gesamte Apparatur geneigt, gerüttelt oder sonst irgendwie bewegt werden, um den Längenvorschub zu erzielen, sondern dies wird durch die Bewegungskomponente erzielt, die man der einströmenden Prozessluft durch die Luftleitelemente auferlegt.

Damit kann nicht nur flexibel auf die Stoffeigenschaften des jeweilig zu behandelnden Guts sondern auch auf die Durchsatzmenge an Gut eingegangen werden, und es können auch Synchronisationsanpassungen zwischen der Einspeisung des Gutes, beispielsweise von einer Kapselherstellungsmaschine zu einer nachgeschalteten Verpackungsmaschine, erzielt werden. Somit sind mechanisch einfach ausgebildete und einfach beherrschbare Möglichkeiten gegeben, um das Behandlungsergebnis in die gewünschte Richtung zu beeinflussen. Es ist möglich, gleiche spezifische Oberflächenwerte des behandelten Gutes zu erzielen, unabhängig davon, ob sich das Gut am Anfang oder am Ende des Tunnels bzw. sich mehr am Rand oder mehr mittig befindet.

In einer weiteren bevorzugten Ausgestaltung der Erfindung sind die Luftleitelemente zwischen den Leitplatten angeordnet.

Diese Maßnahme hat den erheblichen Vorteil, dass gerade zu dem Zeitpunkt, zu dem die Prozessluft zwischen den Luftleitelementen durchtritt, die gewünschte Bewegungskomponente auferlegt wird. Es sind also keine zusätzlichen vor- oder nachgeschalteten Vorrichtungen oder Vorgänge notwendig, sondern an der Stelle, an der die Prozessluft durch den Boden hindurch und in die Prozesskammer hineingeführt wird, erfolgt die Beeinflussung. Dies vereinfacht nicht nur die Konstruktion, sondern macht auch keine sperrigen baulichen Maßnahmen in der eigentlichen Prozesskammer notwendig.

In einer weiteren Ausgestaltung der Erfindung sind Gruppen an Luftleitelementen vorhanden, wobei jede Gruppe unabhängig von einer anderen verstellbar ist.

Diese Maßnahme erhöht die Flexibilität der Prozessluftführung, d.h. es können Bereiche ausgewählt werden, die mehr oder weniger starke Bewegungskomponenten der Prozessluft in Längsrichtung auferlegen. Dies eröffnet die Möglichkeit, sowohl in Quer- als auch in Längsrichtung Zonen zu schaffen, in denen das verwirbelte Gut länger oder kürzer verbleibt, je nachdem, wie dies gewünscht ist.

Greift man auf das zuvor erwähnte Beispiel des Trocknens einer frisch hergestellten Kapsel zurück, so tritt aus der ausgänglich stark feuchtigkeitshaltigen Wand zunächst pro Zeiteinheit eine sehr hohe Feuchtigkeitsmenge aus, während in einem weiter fortgeschrittenen Trocknungsprozess dies langsamer ablaufen soll oder kann, um Risse und Versprödungen auszuschließen, so dass hier gegebenenfalls eine längere oder, je nach Prozessführung, auch kürzere Verweildauer sinnvoll ist.

In einer weiteren Ausgestaltung der Erfindung weist eine Gruppe eine Reihe an in Längsrichtung hintereinander angeordneten Leitelementen auf.

Diese Maßnahme hat den Vorteil, dass, in Querrichtung gesehen, unterschiedliche Gruppen an Leitelementen ausgerichtet werden können, so dass beispielsweise in den seitlichen äußeren Randbereichen der eingeführten Prozessluft eine höhere Bewegungskomponente in Längsrichtung auferlegt wird als in weiter mittig oder innen liegenden Bereichen, oder auch umgekehrt.

In einer weiteren Ausgestaltung der Erfindung sind die Leitelemente einer Gruppe durch ein gemeinsames Verstellorgan verstellbar.

Diese Maßnahme hat den Vorteil, dass dieses gruppenweise Verstellen sehr einfach zu bewerkstelligen ist.

In einer weiteren Ausgestaltung der Erfindung sind die Verstellorgane aller Gruppen über eine zentrale Steuerung einzeln und/oder gemeinsam verstellbar.

Diese Maßnahme hat den Vorteil, dass über die zentrale Steuerung ganz gezielt jeweils auf das zu behandelnde Gut angepasst werden kann, um ein optimales Behandlungsergebnis zu erzielen.

In einer weiteren Ausgestaltung der Erfindung sind die Leitelemente als verschwenkbare Leitfinger ausgebildet.

Diese Maßnahme hat den Vorteil, dass schlank bauende Bauelemente zur Verfügung stehen, die zwischen den Leitplatten angeordnet werden können, und die, ohne einen allzu großen Strömungswiderstand darzustellen, die gewünschte Bewegungskomponente der eingeführten Prozessluft auferlegen können, was sich unter dem Strich gesehen sehr ökonomisch auswirkt.

In einer weiteren Ausgestaltung der Erfindung stehen die Leitfinger einer Gruppe mit einer Stellstange in Eingriff, deren Längsverschiebung eine Verschwenkung verursacht.

Diese Maßnahme hat den Vorteil, dass durch mechanisch sehr einfache Mittel die Verstellbarkeit bewirkt wird.

In einer weiteren Ausgestaltung der Erfindung ist jeder Leitfinger um einen zwischen zwei Leitplatten stehenden Lagerbolzen verschwenkbar.

Diese Maßnahme hat den Vorteil, dass die Verschwenklagerung einfach und mechanisch stabil ist, und dass dieser Lagerbolzen zugleich als Distanzhalter zweier übereinanderliegender Leitplatten dienen kann, so dass eine mechanisch einfache Konstruktion vorliegt.

In einer weiteren Ausgestaltung der Erfindung ist die Stellstange kammartig ausgebildet, und Zähne der Stellstange stehen mit einem Stehbolzen eines Leitfingers kämmend in Eingriff.

Diese Maßnahme hat den Vorteil, dass nicht nur ein mechanisch einfaches System vorhanden ist, sondern auch ein System, das einfach zerlegt und gereinigt werden kann, was insbesondere im Einsatz in der pharmazeutischen Industrie von großer Bedeutung ist.

In einer weiteren Ausgestaltung der Erfindung ist unter dem Boden ein Zuluftwindhaus angeordnet, das in Längsrichtung gesehen, durch Querwände in Kammern unterteilt ist.

Diese Maßnahme hat den Vorteil, dass durch die kammerartige Einteilung Abschnitte gebildet werden, die ganz definierte Zuspeisungen von Prozessluft durch den Boden hindurch ermöglichen. Damit ist auch ausgeschlossen, dass sich die eingeführte Prozessluft den Weg eines geringeren Widerstandes sucht und im Zuluftwindhaus strömt, ohne definiert durch den Boden hindurch zu strömen.

In einer weiteren Ausgestaltung der Erfindung sind in den Kammern Luftverteilraster angeordnet.

Diese Maßnahme hat den erheblichen Vorteil, dass die in eine solche Kammer eingespeiste Prozessluft durch den Luftverteilraster sehr gleichmäßig verteilt an die Unterseite des Bodens herangeführt und dann dementsprechend definiert verteilt durch die Schlitze hindurchgeführt wird. Dies trägt ebenfalls zu einer Verbesserung des Behandlungsergebnisses bei.

In einer weiteren Ausgestaltung der Erfindung ist jede Kammer mit einer Zulufteinspeisung versehen.

Diese Maßnahme hat den Vorteil, dass eine weitere Individualisierung der Luftzuführung und -durchführung durch den Boden möglich ist.

In einer weiteren Ausgestaltung der Erfindung ist jede Kammer individuell mit Zuluft versorgbar.

Dies erhöht noch weiter die Steuerungsmöglichkeit.

In einer weiteren Ausgestaltung der Erfindung ist in jeder Kammer ein Gebläse angeordnet.

Dies gestattet es, durch entsprechende Ansteuerung der Gebläse in Zusammenwirkung mit der erfindungsgemäßen Verstellbarkeit der Luftleitelemente ein optimales Behandlungsergebnis zu erzielen.

Soll in der Prozesskammer dem Gut ein flüssiges Medium aufgebracht werden, z.B. beim Coaten, sind entsprechende Düsen zur Zufuhr vorgesehen, beispielsweise in den Wänden der Prozesskammer oder im Boden im Bereich der Aufbruchzone.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nachfolgend an Hand einiger ausgewählter Ausführungsbeispiele im Zusammenhang mit der beiliegenden Zeichnung näher beschrieben und erläutert. Es zeigen:
- Fig. 1: stark schematisiert eine perspektivische Ansicht eines ersten Ausführungsbeispiels einer erfindungsgemäßen Vorrichtung mit tunnelförmiger Prozesskammer,
- Fig. 2: einen Querschnitt der Vorrichtung von Fig. 1 längs der Line II-II in Fig. 1,
- Fig. 3: eine ausschnittsweise weiter vergrößerte Darstellung des Schnittes von Fig. 2 im Bereich des rechten Endes des Bodens,
- Fig. 4: eine stark schematische, teilweise aufgebrochene Draufsicht auf den Boden in diesem Bereich,
- Fig. 5: eine ausschnittsweise, teilweise aufgebrochene Draufsicht auf den Boden der Vorrichtung von Fig. 1, wobei die Gruppen an Luftleitelementen so ausgerichtet sind, dass der eingeführten Prozessluft keine Bewegungskomponente in Längsrichtung auferlegt wird,
- Fig. 6: eine der Darstellung von Fig. 5 entsprechende Darstellung, in der die Luftleitelemente derart verschwenkt sind, dass der eingeführten Prozessluft eine Bewegungskomponente in Längsrichtung auferlegt wird, und
- Fig. 7: eine der Darstellung von Fig. 2 vergleichbare Schnittdarstellung eines weiteren Ausführungsbeispiels einer erfindungsgemäßen Vorrichtung.

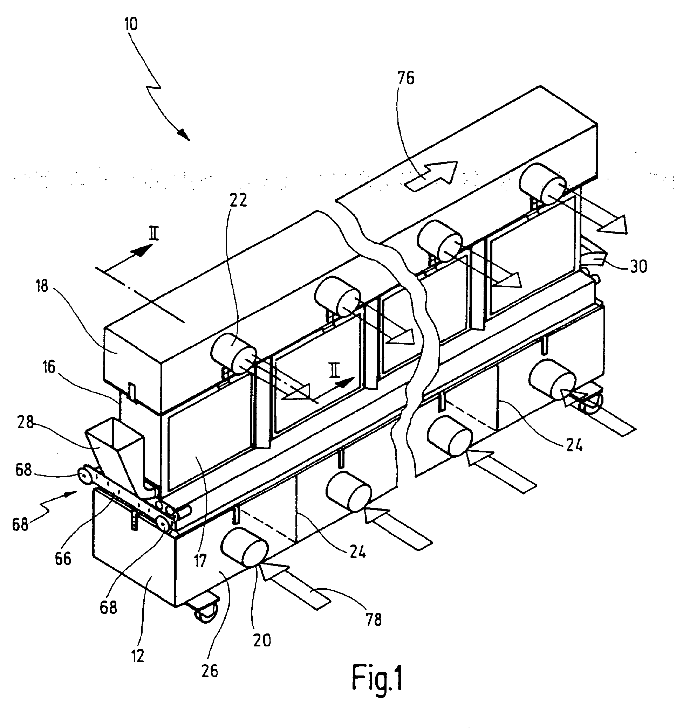

Eine in Fig. 1 dargestellte erfindungsgemäße Vorrichtung ist in ihrer Gesamtheit mit der Bezugsziffer 10 versehen.

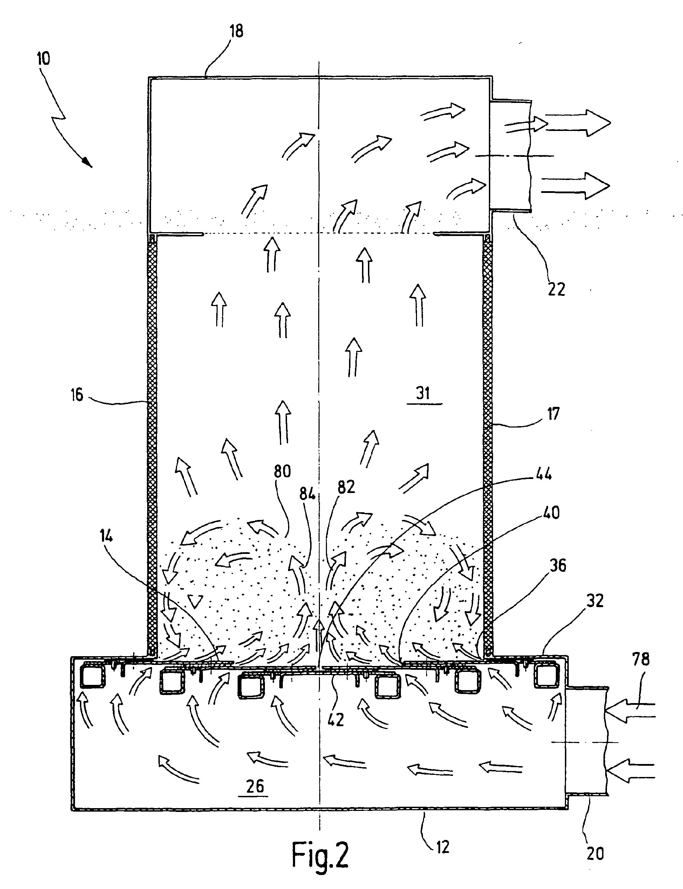

Die Vorrichtung 10 weist einen auf hier nicht näher bezeichneten Rädern stehenden Unterbau in Form eines Zuluftwindhauses 12 auf. Der obere Abschluss des Zuluftwindhauses 12 bildet zwischen zwei hochstehenden Seitenwänden 16 und 17 einen Boden 14, der insbesondere aus den Fig. 2 bis 6 ersichtlich ist. Am oberen Ende der hochstehenden Seitenwände 16 ist eine Abzugkammer 18 angeordnet. Das Zuluftwindhaus 12 ist mit zahlreichen seitlichen Zuluftstutzen 20 versehen. Die Abzugkammer 18 ist auf gleicher Höhe mit einer entsprechenden Anzahl Abluftstutzen 22 versehen.

In dem Zuluftwindhaus 12 sind mehrere Querwände 24 eingezogen, so dass das Zuluftwindhaus 12 in zahlreiche Kammern 26 unterteilt ist.

Das dem Betrachter in Fig. 1 zugewandte Ende der Vorrichtung 10 ist mit einem Einlass 28 versehen, an dem ein Einlasstrichter angesetzt ist.

Am gegenüberliegenden Ende ist ein Auslass 30 vorhanden. Im Inneren der Vorrichtung 10 ist somit eine langerstreckte tunnelförmige Prozesskammer 31 vorhanden, die unten durch den Boden 14 umgrenzt ist, seitlich durch die Wände 16 und 17, und am oberen Ende durch die Abzugkammer 18.

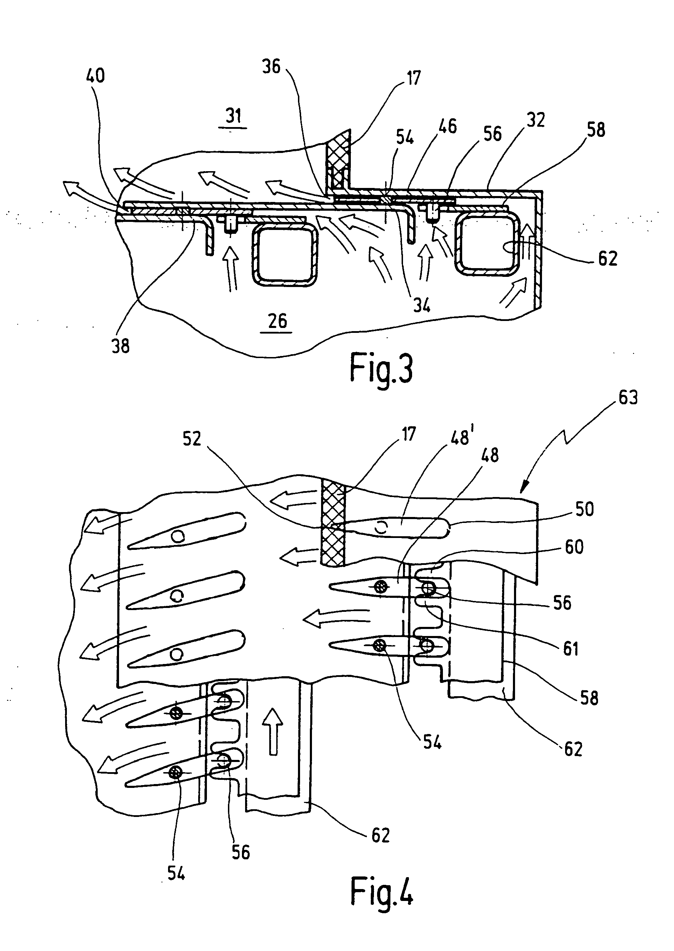

Der Aufbau des Bodens 14 soll im Zusammenhang mit den Fig. 2 bis 4 näher erläutert werden, wobei die Fig. 3 einen stark vergrößerten Ausschnitt des Schnittes von Fig. 2 auf dessen rechter Hälfte zeigt.

Aus Fig. 3 ist somit ersichtlich, dass eine erste Leitplatte 32 vorhanden ist, die sich etwa horizontal erstreckt, seitlich nach unten abgewinkelt ist und Teil des Zuluftwindhauses 12 ist. Diese Leitplatte trägt auch die hochstehende Seitenwand 17.

Unter der Leitplatte 32 ist eine weitere Leitplatte 34 angeordnet, wobei dies derart ist, dass die oben liegende Leitplatte 32 die darunter liegende Leitplatte 34 überlappt.

Daher ist zwischen diesen beiden Leitplatten 32 und 34 ein Spalt ausgebildet, der in einem Schlitz 36 mündet, durch den Prozessluft 78 aus dem Zuluftwindhaus 12 in die Prozesskammer 31 eintreten kann.

Dieser Schlitz 36 erstreckt sich über die gesamte Länge der Prozesskammer 31, und zwar am unteren Ende der Wand 17. Dieser Schlitz 36 sorgt dafür, dass sich kein Material in dieser Ecke festsetzt, diese also immer freigeblasen wird.

Unter der Leitplatte 34 ist eine weitere Leitplatte 38 angeordnet, und zwar derart, dass die oben liegende Leitplatte 34 die darunter liegende Leitplatte 38 etwas überlappt. Dadurch ist ein weiterer Schlitz 40 gebildet, der sich ebenfalls wieder über die gesamte Länge der Prozesskammer 31 erstreckt, der parallel zum Schlitz 36 verläuft, jedoch gegenüber diesem weiter innen liegt.

Unter der Leitplatte 38 liegt eine mittige Leitplatte 42, so dass ein weitere Schlitz gebildet wird, der sich genau längs der Mittellängslinie der Prozesskammer 31 erstreckt.

Wie aus der Schnittdarstellung von Fig. 2 ersichtlich ist, ist auf der linken Hälfte noch einmal eine identische spiegelbildliche Leitplattenanordnung vorhanden.

Wird Prozessluft 78 durch den Boden 14 geleitet, wie das in Fig. 2 dargestellt ist, entsteht eine mittige Aufbruchzone 44, in der die beiden entgegengerichteten Ströme 82 und 84 aufeinander treffen und nach oben abgelenkt werden, wie dies durch die Strömungspfeile demonstriert ist.

Im Betrieb strömt somit die durch den Zuluftstutzen 20 eingeführte Prozessluft 78 in die entsprechende Kammer 26 im Zuluftwindhaus 12, tritt durch die Schlitze im Boden 14 durch diese hindurch, wodurch sich die beiden entgegengesetzt gerichteten, quer zur Längsrichtung 76 verlaufenden Strömungen 82 und 84 ausbilden. Dadurch wird ein in der Prozesskammer 31 aufgenommenes zu behandelndes Gut 80 in Querrichtung in zwei etwa kreisförmige, entgegengesetzt umlaufende Wirbel versetzt, die im Bereich der Aufbruchzone 44 aufsteigen, dann jeweils zur Innenseite der Wände 16 und 17 abgelenkt werden, an den Wänden nach unten abgeleitet werden, wieder auf den Boden 14 fallen, und durch die durch den Boden 14 hindurch tretende Prozessluft 78 erneut Richtung mittige Aufbruchzone 44 beschleunigt werden.

Mit dieser Wirbelcharakteristik wird das zu behandelnde Gut 80 gleichmäßig verwirbelt, so dass ein intensiver Energieaustausch zwischen der Prozessluft 78 und dem Gut 80 stattfinden kann. Soll es sich um einen Trocknungsvorgang handeln, wird heiße Luft als Prozessluft 78 eingeführt. Dabei erwärmen sich die Gutteilchen 80 so weit, dass Feuchtigkeit ausdampft. Diese wird von der Prozessluft 78 mitgerissen, nach oben abgeführt und über die Abluftstutzen 22 einer Aufarbeitung, beispielsweise einer Entfeuchtung, einer Wiedererwärmung und anschließenden Rückführung unterworfen.

Um den verwirbelten Gutteilchen 80 nun eine Bewegungskomponente in Längsrichtung 76 aufzuerlegen, sind, wie das insbesondere aus den Fig. 3 und 4 ersichtlich ist, zwischen den Leitplatten Luftleitelemente 46 angeordnet. Aus der Draufsicht von Fig. 4 ist ersichtlich, dass jedes Luftleitelement 46 aus einem Leitfinger 48 besteht, der einerseits ein abgerundetes Ende 50 und gegenüberliegend ein spitz zulaufendes Ende 52 aufweist. Jeder Leitfinger 48 besteht aus einem Blechstanz- oder Laserteil. Über einen Lagerbolzen 54 ist jeder Leitfinger 48 zwischen zwei übereinanderliegende Leitplatten gehalten, wobei dies stellvertretend in Fig. 3 für den Leitfinger 48 zwischen der oberen Leitplatte 32 und der darunter liegenden Leitplatte 34 näher dargestellt ist. Der Lagerbolzen 54 kann zugleich als Distanzhalter für diese beiden Leitplatten 32 und 34 herangezogen werden.

Wie insbesondere aus Fig. 3 zu entnehmen ist, steht von der Unterseite des Leitfingers 48 im Bereich dessen abgerundeten Endes 50 ein Stehbolzen 56 nach unten vor.

Dieser Stehbolzen 56 steht in Eingriff mit zwei Zähnen 60 und 61 einer Kämmplatte 58.

Die Kämmplatte 58 ist mit einer Stellstange 62 verbunden.

Wie aus Fig. 4 zu entnehmen ist, ist eine ganze Reihe an Leitfingern 48 in Längsrichtung 76 gesehen hintereinander angeordnet, und zwar über die gesamte Länge der Prozesskammer 31. Wird nun die Stellstange 62 in Längsrichtung verschoben, wie das auf der linken Hälfte von Fig. 4 dargestellt ist, werden die Leitfinger 48 verschwenkt, und zwar alle gleichsinnig und alle um das gleiche Maß. Durch das Verstellen der Leitfinger 48 wird dann der Prozessluft 78, die zwischen den Platten 32 und 34 hindurchtritt, eine entsprechende Bewegungskomponente auferlegt, in der Darstellung von Fig. 4 nach unten gerichtet. Es ist somit nur ein einziges Verstellorgan 63 für eine Reihe an Leitfingern 48 vorhanden.

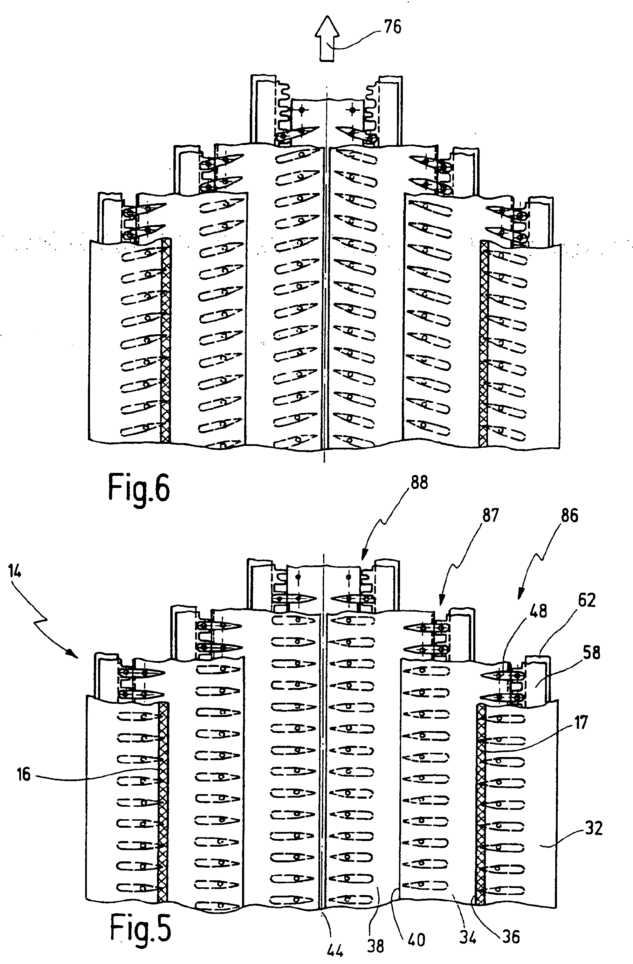

Aus der Darstellung von Fig. 5 ist ersichtlich, dass beidseits der mittigen Aufbruchzone 44 drei Reihen an in Längsrichtung hintereinander geordneten Leitfingern 48 vorhanden sind, so dass in jeder Hälfte drei Gruppen 86, 87 und 88 an derartigen Luftleitelementen vorhanden sind. Durch entsprechendes Verstellen bzw. Verschieben der Stellstangen kann jede einzelne Gruppe 86, 87 bzw. 88 individuell verstellt werden.

Dazu ist jedes Stellorgan am äußeren Ende der Vorrichtung 10, siehe die Darstellung von Fig. 1, mit einem von der Außenseite zugänglichen Stellrad 68 versehen (hier sind nur zwei äußere Stellräder 68 dargestellt), so dass individuell die jeweilige Verschwenkstellung einer Reihe bzw. Gruppe 86, 87 jeder Hälfte verstellt werden kann. In Fig. 1 ist ersichtlich, dass ein Querriegel 66 vorgesehen ist, der dafür sorgt, dass alle Leitelemente gleichsinnig und um das gleiche Maß verstellt werden können, je nachdem, wie dies gewünscht ist.

Somit können beispielsweise durch Verdrehen der Stellräder 68 sämtliche sechs Gruppen aus der in Fig. 5 gezeigten Stellung in die in Fig. 6 gezeigte Stellung verschwenkt werden, wodurch dann der durchtretenden Prozessluft 78 eine Bewegungskomponente in Längsrichtung 76 auferlegt wird.

In dem dargestellten Ausführungsbeispiel erstreckt sich eine Gruppe 86 über die gesamte Länge der Prozesskammer 31. Es ist auch möglich, diese Gruppen nun noch in Längsrichtung unterteilt individuell und unterschiedlich verstellbar auszugestalten.

Im Betrieb ist es möglich, durch die Steuerung der Menge der zugeführten Prozessluft 78, im Zusammenhang mit der Verschwenkstellung der Luftleitelemente 46, eine entsprechende Verweildauer der verwirbelten Gutteilchen 80 in der Prozesskammer 31 individuell und optimal einzustellen.

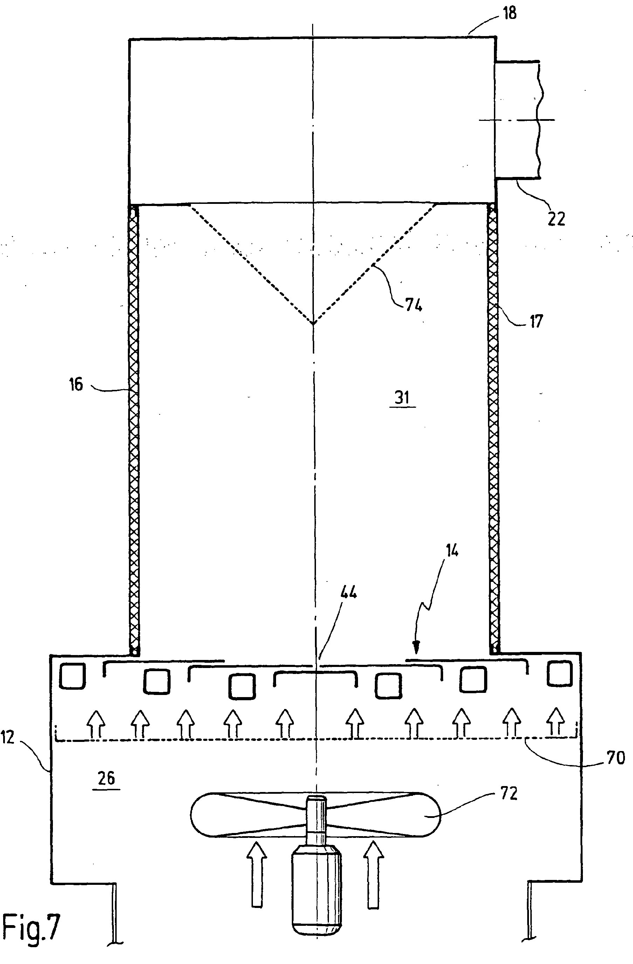

In Fig. 7 ist dargestellt, wie die Steuerung noch weiter individualisiert werden kann. Im Zuluftwindhaus 12 ist jeder einzelnen Kammer 26 ein Gebläse in Form eines Axialgebläses 72 zugeordnet, das individuell jeweils angesteuert werden kann, so dass jeder Kammer unabhängig von der anderen eine gewisse Menge an Prozessluft zugeführt werden kann. Aus Fig. 7 ist ferner ersichtlich, dass zwischen dem Axialgebläse 72 und der Unterseite des Bodens 14 ein Luftverteilraster 70 angeordnet ist, das dafür sorgt, dass die Luft sehr gleichmäßig verteilt der Unterseite des Bodens 14 (der hier nur sehr schematisch dargestellt ist) zugeführt wird. Ferner ist ersichtlich, dass in der Prozesskammer 78 ein Filter 74 angeordnet sein kann, wie das hier nur sehr schematisch dargestellt ist, um insbesondere im pharmazeutischen Bereich wertvolle mitgerissene Schwebstoffe in der Prozesskammer 31 zurückzuhalten.

Soll ein Coating durchgeführt werden, können entsprechende Sprühdüsen eingesetzt werden. Diese können in den Seitenwänden 16 und/oder 17 angeordnet sein oder auch als stehende Düsen im Boden 14 eingesetzt werden, vorzugsweise im Bereich der mittigen Aufbruchzone 44.

## Patentansprüche

1. Vorrichtung zum Behandeln von partikelförmigem Gut (80), mit einer langerstreckten, tunnelförmigen Prozesskammer (31), längs der das zu behandelnde Gut (80) von einem Einlass (28) zu einem Auslass (30) bewegbar ist, mit einem Boden (14), der sich überlappende Leitplatten (34, 38, 42) aufweist, zwischen denen sich in Längsrichtung (76) der Prozesskammer (31) erstreckende Schlitze (36, 40) ausgebildet sind, durch die Prozessluft (78) in die Prozesskammer (31) einführbar ist, und zwar derart, dass zwei quer zur Längsrichtung (76) und entgegengesetzt auf einander zu gerichtete Strömungen (82, 84) an eingeführter Prozessluft (78) entstehen, die längs einer Aufbruchzone (44) aufeinander treffen, sowie mit im Boden (14) angeordneten Luftleitelementen (46) für die Prozessluft (78), die derart verstellbar sind, dass der Prozessluft (78) eine veränderbare Bewegungskomponente in Längsrichtung (76) auferlegbar ist.

2. Vorrichtung nach Anspruch 1, **dadurch gekennzeichnet, dass** die Luftleitelemente (46) zwischen den Leitplatten (34, 38, 42) angeordnet sind.

3. Vorrichtung nach Anspruch 1 oder 2, **dadurch gekennzeichnet, dass** Gruppen (86, 87, 88) an Luftleitelementen (46) vorhanden sind, wobei jede Gruppe (86, 87, 88) unabhängig von einer anderen verstellbar ist.

4. Vorrichtung nach Anspruch 3, **dadurch gekennzeichnet, dass** eine Gruppe (86, 87, 88) eine Reihe an in Längsrichtung (76) hintereinander angeordneten Luftleitelementen (46) aufweist.

5. Vorrichtung nach Anspruch 3 oder 4, **dadurch gekennzeichnet, dass** die Luftleitelemente (46) einer Gruppe (86, 87, 88) durch ein gemeinsames Verstellorgan (63) verstellbar sind.

6. Vorrichtung nach Anspruch 5, **dadurch gekennzeichnet, dass** die Verstellorgane (63) aller Gruppen (86, 87, 88) über eine zentrale Steuerung (64) einzeln und/oder gemeinsam verstellbar sind.

7. Vorrichtung nach einem der Ansprüche 1 bis 6, **dadurch gekennzeichnet, dass** die Luftleitelemente (46) als verschwenkbare Leitfinger (48) ausgebildet sind.

8. Vorrichtung nach Anspruch 7, **dadurch gekennzeichnet, dass** die Leitfinger (48) einer Gruppe (86, 87, 88) mit einer Stellstange (62) in Eingriff stehen, deren Längsverschiebung eine Verschwenkung der Leitfinger(48) verursacht.

9. Vorrichtung nach Anspruch 7 oder 8, **dadurch gekennzeichnet, dass** jeder Leitfinger (48) um einen zwischen zwei Leitplatten (32, 34) stehenden Lagerbolzen (54) verschwenkbar ist.

10. Vorrichtung nach Anspruch 8 oder 9, **dadurch gekennzeichnet, dass** die Stellstange (62) kammartig ausgebildet ist und dass Zähne (60, 61) der Stellstange (62) mit einem Stehbolzen (56) eines Leitfingers (48) kämmend in Eingriff stehen.

11. Vorrichtung nach einem der Ansprüche 1 bis 10, **dadurch gekennzeichnet, dass** unter dem Boden (14) ein Zuluftwindhaus (12) angeordnet ist, das, in Längsrichtung (76) gesehen, durch Querwände (24) in Kammern (26) unterteilt ist.

12. Vorrichtung nach Anspruch 11, **dadurch gekennzeichnet, dass** in den Kammern (26) Luftverteilraster (70) angeordnet sind.

13. Vorrichtung nach Anspruch 11 oder 12, **dadurch gekennzeichnet, dass** jede Kammer (26) mit einer Zulufteinspeisung versehen ist.

14. Vorrichtung nach einem der Ansprüche 11 bis 13, **dadurch gekennzeichnet, dass** jede Kammer (26) individuell mit Zuluft versorgbar ist.

15. Vorrichtung nach Anspruch 14, **dadurch gekennzeichnet, dass** in jeder Kammer (26) ein Gebläse (72) angeordnet ist.

## Claims

1. Device for treating particulate material (80), comprising an elongated, tunnel-like process chamber (31), along which the material (80) to be treated can be moved from an inlet (28) to an outlet (30), having a bottom (14) which has overlapping guide plates (34, 38, 42), between which slots (36, 40) extending in the longitudinal direction (76) of the process chamber (31) are formed, through which process air (78) can be introduced into the process chamber (31), specifically in such a way that two flows (82, 84) of introduced process air (78) oriented transversely with respect to the longitudinal direction (76) and oriented oppositely toward each other are produced and impinge on each another along a breaking-up zone (44), and having air guide elements (46) arranged in the bottom (14) for the process air (78), which can be adjusted in such a way that the process air (78) can have superimposed on it a variable movement component in the longitudinal direction (76).

2. Device of claim 1, **characterized in that** the air guide elements (46) are arranged between the guide plates (34, 38, 42).

3. Device of claims 1 or 2, **characterized in that** there are groups (86, 87, 88) of air guide elements (46), it being possible for each group (86, 87, 88) to be adjusted independently of another.

4. Device of claim 3, **characterized in that** a group (86, 87, 88) has a row of air guide elements (46) arranged one after another in the longitudinal direction (76).

5. Device of claims 3 or 4, **characterized in that** the air guide elements (46) of a group (86, 87, 88) can be adjusted by a common adjusting element (63).

6. Device of claim 5, **characterized in that** the adjusting elements (63) of all the groups (86, 87, 88) can be adjusted individually and/or jointly via a central control system (64).

7. Device of anyone of claims 1 through 6, **characterized in that** the air guide elements (46) are constructed as pivotable guide fingers (48).

8. Device of claim 7, **characterized in that** the guide fingers (48) of a group (86, 87, 88) engage with an actuating rod (62), whose longitudinal displacement causes the guide fingers (48) to be pivoted.

9. Device of claims 7 or 8, **characterized in that** each guide finger (48) can be pivoted about a bearing pin (54) standing between two guide plates (32, 34).

10. Device of claims 8 or 9, **characterized in that** the actuating rod (62) is comb-like and wherein teeth (60, 61) of the actuating rod (62) intermesh with a stud (56) belonging to a guide finger (48).

11. Device of anyone of claims 1 through 10, **characterized in that**, under the bottom (14), there is arranged a feed air box (12) which, as viewed in the longitudinal direction (76), is subdivided into chambers (26) by transverse walls (24).

12. Device of claim 11, **characterized in that** air distribution grids (17) are arranged in the chambers (26).

13. Device of claims 11 or 12, **characterized in that** each chamber (26) is provided with an air feed.

14. Device of anyone of claims 11 through 13, **characterized in that** each chamber (26) can be supplied individually with feed air.

15. Device of claim 14, **characterized in that** a blower (72) is arranged in each chamber (26).

## Revendications

1. Dispositif pour le traitement d'une matière particulaire (80), avec une chambre de processus (31) allongée, en forme de tunnel, le long de laquelle la matière à traiter (80) est mobile d'une entrée (28) vers une sortie (30), avec un fond (14), comportant des plaques chevauchantes (34, 38, 42), entre lesquelles sont ménagées des fentes (36, 40) s'étendant dans la direction longitudinale (76) de la chambre de processus (31), à travers lesquelles on peut introduire de l'air du processus (78) dans la chambre de processus (31), à savoir de façon à donner naissance à deux courants (82, 84) d'air de processus introduit (78) dirigés transversalement par rapport à la direction longitudinale (76) et de manière opposée l'un par rapport à l'autre, qui se rencontrent le long d'une zone de rupture (44) ainsi qu'avec des éléments déflecteurs (46) pour l'air du processus (78), qui sont disposés dans le fond (14), qui sont réglables de façon à pouvoir appliquer à l'air de processus (78) une composante motrice variable en direction longitudinale (76).

2. Dispositif selon la revendication 1, **caractérisé en ce que** les éléments déflecteurs d'air (46) sont disposés entre les plaques directrices (34, 38, 42.)

3. Dispositif selon la revendication 1 ou 2, **caractérisé en ce que** des groupes (86, 87, 88) sont présents sur des éléments déflecteurs d'air (46), chaque groupe (86, 87, 88) étant réglable indépendamment d'un autre.

4. Dispositif selon la revendication 3, **caractérisé en ce qu'**un groupe (86, 87, 88) comporte une rangée d'éléments déflecteurs d'air (46) disposés les uns derrière les autres en direction longitudinale (76).

5. Dispositif selon la revendication 3 ou 4, **caractérisé en ce que** les éléments déflecteurs d'air (46) d'un groupe (86, 87, 88) sont réglables par un organe de réglage commun (63).

6. Dispositif selon la revendication 5, **caractérisé en ce que** les organes de réglage (63) de tous les groupes (86, 87, 88) sont réglables individuellement et/ou ensemble par l'intermédiaire d'une commande centralisée (64).

7. Dispositif selon l'une quelconque des revendications 1 à 6, **caractérisé en ce que** les éléments déflecteurs d'air (46) sont conçus en tant que doigts conducteurs pivotants (48).

8. Dispositif selon la revendication 7, **caractérisé en ce que** les doigts conducteurs (48) d'un groupe (86, 87, 88) s'engagent dans une barre de réglage (62) dont le déplacement longitudinal provoque un pivotement des doigts conducteurs (48).

9. Dispositif selon la revendication 7 ou 8, **caractérisé en ce que** chaque doigt conducteur (48) peut pivoter autour d'un boulon d'appui (54) situé entre deux plaques déflectrices (32, 34)

10. Dispositif selon la revendication 8 ou 9, **caractérisé en ce que** la barre de réglage (62) est conçue en forme de peigne et **en ce que** les dents (60, 61) de la barre de réglage (62) s'engrènent dans un boulon d'entretoisement (56) d'un doigt conducteur (48).

11. Dispositif selon l'une quelconque des revendications 1 à 10, **caractérisé en ce qu'**un pavillon d'air frais (12), qui vu en direction longitudinale (76) est subdivisé en chambres (26) par des parois transversales (24) est disposé sous le fond (14).

12. Dispositif selon la revendication 11, **caractérisé en ce que** des trames déflectrices d'air (70) sont disposées dans les chambres (26),

13. Dispositif selon la revendication 11 ou 12, **caractérisé en ce que** chaque chambre (26) est munie d'une alimentation d'air frais.

14. Dispositif selon l'une quelconque des revendications 11 à 13, **caractérisé en ce que** chaque chambre (26) peut être alimentée individuellement en air frais.

15. Dispositif selon la revendication 14, **caractérisé en ce qu'**une soufflante (72) est disposée dans chaque chambre (26).
